# EUROPÄISCHE PATENTSCHRIFT

(11) **EP 3 657 274 B1**
(45) Veröffentlichungstag und Bekanntmachung des Hinweises auf die Patenterteilung: **06.09.2023**
(21) Anmeldenummer: 18208405.3
(22) Anmeldetag: 26.11.2018
(51) Int. Cl.: G05B 19/042, G05B 19/418, G05B 23/02

(54) **SYSTEM UND VERFAHREN ZUR ÜBERWACHUNG VON PRODUKTIONSTECHNISCHEN ANLAGEN**
SYSTEM AND METHOD FOR MONITORING PRODUCTION SYSTEMS
SYSTÈME ET PROCÉDÉ DE SURVEILLANCE D'INSTALLATIONS DE FABRICATION

(43) Veröffentlichungstag der Anmeldung: 27.05.2020
(73) Patentinhaber: Pfannenberg GmbH, 21035 Hamburg (DE)
(72) Erfinder: KUNC, Oliver, 21035 Hamburg (DE); MATTHIES, Volker, 21035 Hamburg (DE); MERL, Tobias, 21035 Hamburg (DE); SOROWKA, Peter, 22529 Hamburg (DE); SCHMEDING, Marius, 22529 Hamburg (DE)
(74) Vertreter: RGTH

(56) Entgegenhaltungen:
- DE-A1-102008 046 156

## Beschreibung

Die vorliegende Erfindung betrifft ein System und ein Verfahren zur Überwachung von produktionstechnischen Anlagen.

### Technologischer Hintergrund

Zur Überwachung von produktionstechnischen Anlagen sind Systeme bekannt, welche mittels visueller, akustischer oder audiovisueller Signale den jeweiligen Betriebszustand der überwachten produktionstechnischen Anlage anzeigen können.

Die DE 10 2008 046 156 A1 offenbart ein Verfahren zur diagnostischen Überwachung des Betriebszustands einer Vielzahl von an verschiedenen Orten verteilten technischen Anlagen, mittels Empfangen von durch mindestens ein anlagenseitig angeordnetes speicherprogrammierbares Steuerungssystem (SPS) ausgegebenen Statuscodes, wobei ein Informationsaustausch mit außerhalb der technischen Anlagen von diesen entfernt angeordneten und separat ausgebildeten Fernüberwachungseinheiten durchgeführt wird, wobei anlagenseitig jedem Statuscode Betriebsdaten zur Auswertung des Statuscodes zugeordnet werden.

Derartige Systeme können Anlagenstatusleuchten, auch Maschinenstatusleuchten genannt, umfassen, welche nach dem Prinzip einer Signalsäule visuelle Signale aussenden und gegebenenfalls auch Schallgeber zur Ausgabe akustischer Signale aufweisen.

Die Anlagenstatusleuchten sind jeweils einer produktionstechnischen Anlage zugeordnet. Anlagenstatusleuchten können mehrere Leuchtelemente aufweisen, wobei jedes Leuchtelement Licht in einer spezifischen Farbe aussenden kann. Darüber hinaus können die Leuchtelemente Dauerlicht, Blinklicht oder Blitzlicht emittieren. Zur Anzeige des Betriebszustands der überwachten Anlagen empfangen die Anlagenstatusleuchten Statussignale der zugeordneten produktionstechnischen Anlage in Form eines elektrischen Signals. Das Statussignal wird dann durch Ansteuerung der Leuchtelemente als visuelles Signal angezeigt.

Problematisch an den bekannten Systemen und Verfahren zu Überwachung von produktionstechnischen Anlagen ist, dass es keine einheitliche Zuordnung der Statussignale und der visuellen Signale zu den Betriebszuständen der produktionstechnischen Anlagen gibt. Jeder Anlagenhersteller verwendet eine eigene Konvention zur Kodierung eines Betriebszustands in ein Statussignal und zur anschließenden Umsetzung des Statussignals in ein visuelles Signal einer Anlagenstatusleuchte, sodass sich die visuellen Signale der Anlagenstatusleuchten von Anlagen, welche sich in gleichen oder ähnlichen Betriebszuständen befinden, erheblich voneinander unterscheiden können. Beispielsweise kann bei einer ersten Anlage ein Fehler mittels eines roten Dauerlichts angezeigt werden, während bei einer zweiten Anlage der Fehlerzustand durch Blinken aller Lichtmodule der Anlagenstatusleuchte in verschiedenen Farben angezeigt wird. Darüber hinaus können sich die ausgesendeten visuellen Signale der Anlagenstatusleuchten verschiedener produktionstechnischer Anlagen sehr ähneln, obwohl Sie unterschiedlichen Betriebszuständen der produktionstechnischen Anlagen entsprechen.

So kann für eine erste Anlage ein blaues Blinklicht signalisieren, dass die Anlage ungeplant stillsteht, wohingegen bei einer zweiten Anlage ein blaues Blitzlicht anzeigt, dass gerade ein Werkzeugwechsel stattfindet.

Diese Mehrdeutigkeit und Ähnlichkeit der visuellen Signale der Anlagenstatusleuchten von produktionstechnischen Anlagen wird insbesondere dann zu einem Problem, wenn sich auf einer Produktionsfläche eine Vielzahl produktionstechnischer Anlagen von unterschiedlichen Herstellern befindet. Ein Bediener der Anlagen ist dann stets gezwungen, für jede Anlage das von der Anlagenstatusleuchte emittierte Lichtsignal unter Zuhilfenahme einer Betriebsanleitung zu interpretieren.

Darüber hinaus erschwert die Uneinheitlichkeit und Mehrdeutigkeit der Statussignale bzw. der auf Basis der Statussignale generierten visuellen Signale auch die statistische Auswertung der produktionstechnischen Anlagen hinsichtlich ihrer Produktivität oder Fehleranfälligkeit. Die Auswertung der dafür benötigen historischen Zustandsdaten wird ferner dadurch erschwert, dass die von den Anlagenherstellern bestimmten Betriebszustände, welche mittels der Statussignale an die Anlagenstatusleuchten übermittelt werden, zwar ähnlich, jedoch nicht identisch sein müssen. So kann beispielsweise bei einer produktionstechnischen Anlage eines ersten Herstellers ein allgemeiner Fehlerzustand auf einen mechanischen Fehler der Anlage hinweisen, während bei einer anderen Anlage eines zweiten Herstellers ein allgemeiner Fehlerzustand ein Softwareproblem indiziert.

### Darstellung der Erfindung: Aufgabe, Lösung, Vorteile

Es ist daher Aufgabe der vorliegenden Erfindung, ein System zur Überwachung von produktionstechnischen Anlagen bereitzustellen, welche es einem Bediener auf einfache und intuitive Weise ermöglicht, den Zustand einer produktionstechnischen Anlage korrekt zu erfassen und welches eine statistische Auswertung von historischen Zuständen einer produktionstechnischen Anlage erleichtert oder erst ermöglicht.

Ferner ist es Aufgabe der vorliegenden Erfindung, ein Verfahren zur Überwachung produktionstechnischer Anlagen bereitzustellen, mit welchem die vorgenannten Vorteile erzielt werden.

Zur Lösung der der Erfindung zugrundeliegenden Aufgabe wird ein System zur Überwachung von produktionstechnischen Anlagen vorgeschlagen, umfassend mindestens zwei Sendevorrichtungen, eine Empfangsbasis und eine Zuordnungsvorrichtung und eine Anzeigevorrichtung mit einem Bildschirm, wobei die mindestens zwei Sendevorrichtungen ausgebildet sind, mindestens ein Statussignal mindestens einer der jeweiligen Sendevorrichtung zugeordneten produktionstechnischen Anlage über eine Datenverbindung direkt oder indirekt an die Empfangsbasis zu senden, wobei die Empfangsbasis ausgebildet ist, das mindestens eine Statussignal zu empfangen und an die Zuordnungsvorrichtung weiterzuleiten, wobei die Zuordnungsvorrichtung einen elektronischen Schaltkreis umfasst und ausgebildet ist, dem mindestens einen Statussignal mindestens einen Zustand aus einer vorbestimmten Gruppe von Zuständen zuzuordnen, wobei die mindestens zwei Sendevorrichtungen ein vermaschtes Netzwerk bilden, wobei die mindestens zwei Sendevorrichtungen als Sende-Empfangsvorrichtungen ausgebildet sind, wobei die Sende-Empfangsvorrichtungen jeweils einen Signalverstärker aufweisen und/oder als Signalverstärker ausgebildet sind, und wobei die Anzeigevorrichtung ausgebildet ist in Echtzeit die den Statussignalen zugeordneten Zustände anzuzeigen, wobei die Anzeigevorrichtung ausgebildet ist, einen Lageplan anzuzeigen, wobei auf dem Lageplan Orte der Sendevorrichtungen und/oder der produktionstechnischen Anlagen verzeichnet sind, wobei die Anzeigevorrichtung ausgebildet ist, die den Statussignalen zugeordneten Zustände auf dem Lageplan am Ort der jeweiligen Sendevorrichtung und/oder der zugeordneten produktionstechnischen Anlage anzuzeigen.

Ein Signalverstärker wird auch Repeater genannt.

Die mindestens eine produktionstechnische Anlage kann Teil des Systems zur Überwachung von produktionstechnischen Anlagen sein. Die mindestens eine produktionstechnische Anlage ist dann der mindestens einen Sendevorrichtung zugeordnet. Sind mehrere produktionstechnische Anlagen und/oder mehrere Sendevorrichtungen vorgesehen, so können die produktionstechnischen Anlagen der mindestens einen, oder im Fall mehrerer Sendevorrichtungen, einer jeweiligen Sendevorrichtung, zugeordnet sein. Ferner können die produktionstechnischen Anlagen mobile Anlagen oder stationäre beziehungsweise ortsfeste Anlagen sein. Die produktionstechnischen Anlagen können insbesondere als Maschinen oder Werkzeuge ausgebildet sein. Ferner können im Rahmen der Erfindung unter produktionstechnischen Anlagen auch Montageplätze, Handarbeitsplätze oder produktionsbezogene Testeinrichtungen verstanden werden.

Erfindungsgemäß sind den mindestens zwei Sendevorrichtungen jeweils mindestens eine produktionstechnische Anlage zugeordnet. Insbesondere können einer Sendevorrichtung auch mehrere produktionstechnische Anlagen zugeordnet sein, sodass die Sendevorrichtung Statussignale jeder ihr zugeordneten produktionstechnischen Anlage über die Datenverbindung direkt oder indirekt an die Empfangsbasis zu senden kann.

Nach Weiterleitung des mindestens einen Statussignals von der Empfangsbasis an die Zuordnungsvorrichtung ordnet die Zuordnungsvorrichtung dem mindestens einen Statussignal mindestens einen Zustand aus einer vorbestimmten Gruppe von Zuständen zu.

Bevorzugt ist die mindestens eine Sendevorrichtung mit der mindestens einen zugeordneten produktionstechnischen Anlage über eine elektronische Verbindung, eine elektrische Verbindung oder eine Funkverbindung verbindbar oder verbunden, um die Statussignale der produktionstechnischen Anlage zu erhalten. Die elektrische Verbindung kann eine kabelgebundene Verbindung sein. Die produktionstechnische Anlage kann elektronische oder elektrische Kontakte aufweisen, welche mit elektronischen oder elektrischen Eingängen der Sendevorrichtung verbunden sind. Die Statussignale können durch Anlegen elektrischer Spannungen an den elektrischen Kontakten oder durch Übermittlung von Datenpaketen wie Bitfolgen über die elektronischen Kontakte von der produktionstechnischen Anlage an die Sendevorrichtung übermittelt werden. Die Funkverbindung kann einen WLAN-Verbindung oder eine Kurzdistanz-Funkverbindung wie eine Bluetooth-Verbindung oder eine NFC-Verbindung sein.

Auch die Sendevorrichtung und/oder die Empfangsbasis können elektronische Schaltkreise aufweisen.

Erfindungsgemäß ist der mindestens einen Sendevorrichtung mindestens eine produktionstechnische Anlage zugeordnet. Die Sendevorrichtung sendet mindestens ein Statussignal der ihr zugeordneten produktionstechnischen Anlage an die Empfangsbasis über eine Datenverbindung, wobei die Übersendung des Statussignals direkt oder indirekt erfolgen kann. Nach Weiterleitung des Statussignals von der Empfangsbasis an die Zuordnungsvorrichtung ordnet die Zuordnungsvorrichtung dem Statussignal mindestens einen Zustand aus einer vorbestimmten Gruppe von Zuständen zu.

Von der Zuordnungsvorrichtung wird dem mindestens einen empfangenen Statussignal unter Nutzung des elektronischen Schaltkreises mindestens ein Zustand aus einer vorbestimmten Gruppe von Zuständen zugeordnet. Da die Gruppe von Zuständen vorbestimmt ist, wird eine Standardisierung der Betriebszustände oder Zustände der produktionstechnischen Anlage oder der mehreren produktionstechnischen Anlagen bereitgestellt. Somit können auch Statussignale verschiedener produktionstechnischer Anlagen, welche zwar einen im Wesentlichen gleichen Betriebszustand oder Zustand entsprechen, jedoch unterschiedlich ausgebildet sind, dem gleichen Zustand zugeordnet werden.

In einem Fall, in dem einem allgemeinen Fehlerzustand entsprechende Statussignale verschiedener produktionstechnischer Anlagen aufgrund abweichender Signalkonventionen, Datenformate oder Zustandskodierungen in unterschiedliche visuelle Signale zugeordneter Anlagenstatusleuchten umgesetzt werden würden, wird durch die von der Zuordnungsvorrichtung vorgenommene Zuordnung der verschiedenen Statussignale zu einem vordefinierten Fehlerzustand aus der Gruppe der vorbestimmten Zustände sichergestellt, dass ein Bediener bei den produktionstechnischen Anlagen einheitlich den Fehlerzustand feststellen kann.

Im Gegensatz zu aus dem Stand der Technik bekannten Systemen zur Überwachung von produktionstechnischen Anlagen ist es somit nicht mehr notwendig, von unterschiedlichen Statussignalen verschiedener produktionstechnischer Anlagen oder unterschiedlichen visuellen Signalen zugeordneter Anlagenstatusleuchten, welche jedoch dem gleichen oder einem ähnlichen Betriebszustand entsprechen, unter Heranziehung einer Betriebsanleitung auf den tatsächlich gleichen oder ähnlichen Zustand zu schließen.

Einem Bediener, welchem nicht mehr die Statussignale, beispielsweise in Form von visuellen Signalen zugeordneter Anlagenstatusleuchten, sondern die von der Zuordnungsvorrichtung den Statussignalen zugeordneten Zustände angezeigt werden, kann somit in einfacher und intuitiver Weise den Zustand der produktionstechnischen Anlagen korrekt erfassen.

Darüber hinaus wird durch die Zuordnung mindestens eines Zustands aus der Gruppe vorbestimmter Zustände zu den Statussignalen eine historische Analyse der Zustände der produktionstechnischen Anlagen vereinfacht und in vielen Fällen erst ermöglicht, da die bei den Statussignalen bzw. den visuellen Signalen der zugeordneten Anlagenstatusleuchten aufgrund fehlender allgemeiner Konventionen auftretenden Mehrdeutigkeiten vermieden werden. Ein aufwändiger Abgleich der für die einzelnen produktionstechnischen Anlagen geltenden Statussignalkonventionen ist nicht mehr erforderlich.

Darüber hinaus ist es denkbar, jedem Statussignal mehr als einen Zustand aus der vorbestimmten Gruppe von Zuständen zuzuordnen. Hierdurch wird es möglich, einem Bediener zusätzliche Zustandsinformationen zu übermitteln, welche durch das einfache Statussignal nicht erhältlich sind.

Die Zuordnungsvorrichtung weist einen oder mehrere elektronische Schaltkreise auf und kann durch jede geeignete Vorrichtung bereitgestellt werden. Beispielsweise kann die Zuordnungsvorrichtung eine elektronische Recheneinheit, insbesondere ein Computer, sein. Für die Zuordnung mindestens eines Zustands aus der Gruppe vorbestimmter Zustände zu dem mindestens einen Statussignal kann ein Programm, insbesondere ein Computerprogramm, vorgesehen sein, welches auf der Recheneinheit, insbesondere dem Computer, ausgeführt wird.

Die Empfangsbasis ist ausgebildet, die Statussignale von der mindestens einen Sendevorrichtung zu empfangen und kann ebenfalls eine entsprechend ausgebildete Recheneinheit, wie beispielsweise ein Computer, sein. Es ist auch möglich, dass die Zuordnungsvorrichtung und die Empfangsbasis in einer Recheneinheit, beziehungsweise in einem Computer, gemeinsam integriert sind. Die Empfangsbasis kann ferner ein sogenanntes Gateway oder Router sein, über den von einem Drahtlosnetzwerk auf ein Ethernet-Netzwerk gewechselt wird.

Das mindestens eine Statussignal kann bevorzugt als ein elektronisches Signal umfassend eine Bitfolge ausgebildet sein, wobei die Bitfolge weiter bevorzugt von der oder den produktionstechnischen Anlagen durch eine Abfolge von elektrischen Spannungen erzeugt wird. Die mindestens eine Sendevorrichtung kann die Statussignale direkt von der oder den zugeordneten produktionstechnischen Anlagen weiterleiten. Es ist aber auch möglich, dass die mindestens eine Sendevorrichtung Informationen über das visuelle, akustische oder audiovisuelle Signal von den produktionstechnischen Anlagen zugeordneten Anlagenstatusleuchten weiterleitet. Dies ist möglich, da die visuellen, akustischen oder audiovisuellen Signale eine direkte Umsetzung der Statussignale der produktionstechnischen Anlagen sind. Anstatt somit beispielsweise direkt das Statussignal einer produktionstechnischen Anlage zu übertragen, kann die Sendevorrichtung auch Informationen über den Aktivitätszustand der Leuchtelemente einer zugeordneten Anlagenstatusleuchte übermitteln.

Erfindungsgemäß ist vorgesehen, dass die mindestens zwei Sendevorrichtungen ein vermaschtes Netzwerk bilden.

In einem vermaschten Netzwerk ist jede einen Netzwerkknoten darstellende Sendevorrichtung, mit einer oder mehreren anderen Sendevorrichtungen verbunden. Die Statussignale werden von Sendevorrichtung zu Sendevorrichtung weitergereicht, bis die Empfangsbasis erreicht ist.

Ferner kann für jedes Statussignal auf Basis entsprechender Algorithmen entschieden werden, auf welchem Wege, das heißt über welche Sendevorrichtung das Statussignal an die Empfangsbasis übermittelt wird.

Der Vorteil eines vermaschten Netzwerks besteht darin, dass auch bei Ausfall einer oder mehrerer der Sendevorrichtungen Statussignale der nicht betroffenen Sendevorrichtungen weiterhin die Empfangsbasis erreichen und Zuständen zugeordnet werden können.

Bevorzugt ist jede der mindestens zwei Sendevorrichtungen ausgebildet, mindestens ein Statussignal mindestens einer der jeweiligen Sendevorrichtung zugeordneten produktionstechnischen Anlage über die Datenverbindung direkt oder indirekt an die Empfangsbasis zu senden, wobei die Empfangsbasis ausgebildet ist, die Statussignale zu empfangen und an die Zuordnungsvorrichtung weiterzuleiten, wobei die Zuordnungsvorrichtung ausgebildet ist, den Statussignalen jeweils mindestens einen Zustand aus einer vorbestimmten Gruppe von Zuständen zuzuordnen.

Jeder Sendevorrichtung können eine oder mehrere produktionstechnische Anlagen zugeordnet sein.

Bevorzugt ist vorgesehen, dass die vorbestimmte Gruppe von Zuständen einen Fehlerzustand und/oder einen Anlagenstillstandzustand und/oder einen Produktionszustand und/oder einen Umrüstungszustand und/oder einen Werkzeugwechselzustand umfasst. Ferner kann die vorbestimmte Gruppe von Zuständen auch einen Qualitätslagezustand oder einen Materialmangelzustand umfassen. Grundsätzlich ist die Gruppe der vorbestimmten Zustände nicht auf diese vorgenannten Zustände begrenzt.

Darüber hinaus kann ein Default-Zustand vorgesehen sein, welcher Statussignalen zugeordnet wird, welche keinem betriebstechnisch relevanten Zustand entsprechen.

Die Zustände der vorbestimmten Gruppe von Zuständen können vor Inbetriebnahme des Systems definiert werden. Beispielsweise können die Zustände zusammen mit einer Zuordnungsvorschrift für die Statussignale der zugeordneten produktionstechnischen Anlagen in einer Datenbank hinterlegt werden, auf die die Zuordnungsvorrichtung Zugriff hat. Dafür können die Zustände und die Zuordnungsvorschriften über eine Eingabemaske eines auf einer elektronischen Recheneinheit laufenden Computerprogramms eingegeben werden.

Bevorzugt ist vorgesehen, dass die Statussignale der den mindestens zwei Sendevorrichtungen zugeordneten produktionstechnischen Anlagen in einem unterschiedlichen Datenformat vorliegen und/oder mittels unterschiedlicher Netzwerkprotokolle übermittelt werden, und/oder dass die der Sendevorrichtung oder den Sendevorrichtungen zugeordneten produktionstechnischen Anlagen bei im Wesentlichen gleichen Betriebszuständen unterschiedliche Statussignale erzeugen.

Mit anderen Worten kann ein Betriebszustand einer ersten produktionstechnischen Anlage durch ein Statussignal mit einer bestimmten Bitfolge dargestellt werden, während ein im Wesentlichen gleicher Betriebszustand einer zweiten produktionstechnischen Anlage durch ein Statussignal dargestellt werden, welches eine andere Bitfolge aufweist. Darüber hinaus können die einzelnen produktionstechnischen Anlagen auch erfordern, dass die Statussignale mittels unterschiedlicher Netzwerkprotokolle übermittelt werden. Durch die Zuordnung von Zuständen zu den Statussignalen mittels der Zuordnungsvorrichtung wird gewissermaßen eine Übersetzungsfunktion zwischen den unterschiedlichen Datenformaten und/oder unterschiedlichen Netzwerkprotokollen bereitgestellt.

Die Statussignale der produktionstechnischen Anlagen können auch als Spannungen an elektrischen Kontakten der produktionstechnischen Anlagen bereitgestellt werden. Die elektrischen Kontakte können mit elektrischen Eingängen der Sendevorrichtungen verbunden sein, sodass die Sendevorrichtungen mittels der an den elektrischen Eingängen anliegenden Spannungen die Statussignale erhalten. Zur Weiterleitung der Statussignale an die Empfangsbasis bzw. an die Zuordnungsvorrichtung können die Sendevorrichtungen die als elektrische Spannungen aufgenommenen Statussignale in ein Datenpaket, beispielsweise eine Bitfolge, umwandeln. Somit können die Sendevorrichtungen die Statussignale der produktionstechnischen Anlagen durch Abgreifen elektrischer Spannungen an elektrischen Kontakten der produktionstechnischen Anlagen erhalten und entweder unverändert an die Empfangsbasis weiterleiten oder in Form eines Datenpakets, beispielsweise einer Bitfolge, an die Empfangsbasis weiterleiten. Ebenso ist es möglich, dass die Sendevorrichtungen die Statussignale bereits in Form von Datenpaketen, wie Bitfolgen, von den produktionstechnischen Anlagen erhalten und diese dann an die Empfangsbasis weiterleiten. In beiden Fällen können die Statussignale der den Sendevorrichtungen zugeordneten produktionstechnischen Anlagen in einem unterschiedlichen Datenformat vorliegen und/oder mittels unterschiedlicher Netzwerkprotokolle übermittelt werden. Ferner können in beiden Fällen unterschiedliche Statussignale der den Sendevorrichtungen zugeordneten produktionstechnischen Anlagen im Wesentlichen gleichen Betriebszuständen entsprechen.

Erfindungsgemäß ist eine Anzeigevorrichtung vorgesehen sein, welche ausgebildet ist, in Echtzeit die den Statussignalen zugeordneten Zustände anzuzeigen.

Die Anzeigevorrichtung kann beispielsweise als eine lokale Workstation für einen Bediener ausgebildet sein, welche einen Bildschirm umfasst. Darüber hinaus kann die Anzeigevorrichtung auch als mobiles Datenperipheriegerät, wie ein Smartphone oder ein Tablet, ausgebildet sein.

Es können zusätzlich auch weitere als Anlagenstatusleuchte ausgebildete Anzeigevorrichtungen vorgesehen sein.

Auch ist es möglich, dass Statussignale einer Vielzahl produktionstechnischer Anlagen von der Zuordnungsvorrichtung jeweils mindestens einem Zustand zugeordnet werden, und dass die zugeordneten Zustände an eine Anzeigevorrichtung, wie beispielsweise an eine Workstation in einem Kontrollraum, übermittelt werden. Auf der Anzeigevorrichtung kann dann ein Bediener die Zustände der jeweiligen produktionstechnischen Anlagen in einfacher und intuitiver Weise erkennen.

Zur Erhöhung der Erkennbarkeit können die Zustände durch die Anzeige von Begriffen oder Wortkombinationen angezeigt werden. Beispielsweise kann ein Fehlerzustand durch Ausgabe des Begriffs "Fehler" oder "Defekt" auf einer Anzeigevorrichtung angezeigt werden. Im Falle eines Werkzeugwechselzustands kann der Begriff "Werkzeugwechsel" oder die Wortkombination "Umrüstung wird vorgenommen" angezeigt werden. Hinsichtlich der Anzeige der Zustände mit Begriffen und Wortkombinationen unterliegt das System keiner Einschränkung.

Erfindungsgemäß ist vorgesehen, dass die Anzeigevorrichtung ausgebildet ist, einen Lageplan anzuzeigen, wobei die Anzeigevorrichtung ausgebildet ist, die den Statussignalen zugeordneten Zustände auf dem Lageplan am Ort der jeweiligen Sendevorrichtung und/oder der zugeordneten produktionstechnischen Anlage anzuzeigen.

Der Lageplan kann ein Grundriss einer Produktionsstätte wie einer Fabrik sein. An den Orten der produktionstechnischen Anlagen können im Lageplan Piktogramme oder Symbole angezeigt werden. An den Orten der produktionstechnischen Anlage kann dann gleichzeitig der Zustand der jeweiligen produktionstechnischen Anlage beispielsweise mittels eines Begriffes oder einer Wortkombination angezeigt werden.

Ein Bediener an einer Anzeigevorrichtung in einem Kontrollraum erhält somit über den Zustand der jeweiligen produktionstechnischen Anlage hinaus weitere Informationen, beispielsweise über den Typ der produktionstechnischen Anlage.

Mit weiterem Vorteil kann eine Anlagenstatusleuchte vorgesehen sein.

Insbesondere können mehrere Anlagenstatusleuchten vorgesehen sein, wobei die Anlagenstatusleuchten jeweils einer produktionstechnischen Anlage zugeordnet sind.

Die Anlagenstatusleuchte kann weiter bevorzugt mindestens ein Leuchtelement zur Anzeige eines Statussignals einer produktionstechnischen Anlage aufweisen. Die Anlagenstatusleuchte kann auch einen Schallgeber aufweisen.

Es ist dadurch möglich, dass jede einer produktionstechnischen Anlage zugeordnete Anlagenstatusleuchte in herkömmlicher Weise das Statussignal der produktionstechnischen Anlage durch ein visuelles, akustisches oder auch audiovisuelles Signal darstellt. Mit anderen Worten kann die produktionstechnische Anlage ein Statussignal erzeugen und es an die Anlagenstatusleuchte senden, welche in herkömmlicher Weise ein visuelles, akustisches oder audiovisuelles Signal aussendet, und gleichzeitig kann das Statussignal über die Sendevorrichtung an die Zuordnungsvorrichtung übermittelt werden, welche dem Statussignal einen Zustand aus der Gruppe vorbestimmter Zustände zuordnet. Der Zustand kann dann beispielsweise auf einer Anzeigevorrichtung in einem Kontrollraum angezeigt werden.

Darüber hinaus ist es jedoch auch möglich, dass das Statussignal von der produktionstechnischen Anlage erzeugt und über die Sendevorrichtung zuerst an die Zuordnungsvorrichtung übermittelt wird, welche dem Statussignal einen Zustand zuordnet. Anschließend kann der dem Statussignal zugeordnete Zustand an die Anlagenstatusleuchte übermittelt werden, welche dann den zugeordneten Zustand in ein visuelles, akustisches oder audiovisuelles Signal umsetzt. Hierdurch wird der Vorteil erzielt, dass bei unterschiedlichen produktionstechnischen Anlagen, welche sich in einem gleichen Zustand befinden, trotz unterschiedlicher diesen Zustand beschreibenden Statussignalen, ein gleiches audiovisuelles Signal über die Anlagenstatusleuchte erzeugt wird.

Bevorzugt ist vorgesehen, dass die Anlagenstatusleuchte modular aufgebaut ist, wobei eine der Sendevorrichtungen ein erstes Modul ist und das Leuchtelement ein zweites Modul ist.

Mit anderen Worten kann die Anlagenstatusleuchte die Sendevorrichtung umfassen. Eine modular ausgestaltete Anlagenstatusleuchte mit einer als Modul ausgebildeten Sendevorrichtung kann einfach am Ort einer produktionstechnischen Anlage aufgebaut und angepasst werden.

Ferner kann eine Speichervorrichtung vorgesehen sein, welche ausgebildet ist, die den Statussignalen zugeordneten Zustände zu speichern und/oder es kann eine Auswertevorrichtung vorgesehen sein, welche ausgebildet ist, eine zeitliche Abfolge der den Statussignalen zugeordneten Zustände auszuwerten.

Grundsätzlich können die Zustände jedoch auch anders als in Form einer zeitlichen Abfolge ausgewertet werden.

Durch Speichern der den Statussignalen zugeordneten Zustände kann eine Historie der Zustände für jede überwachte produktionstechnische Anlage bereitgestellt werden. Es ist ferner möglich, dass eine Auswertevorrichtung aus den historischen Zuständen bzw. den abgespeicherten Zuständen eine zeitliche Abfolge der Zustände bildet und diese auswertet.

Zudem kann die zeitliche Abfolge der den Statussignalen zugeordneten Zuständen auf einer Anzeigevorrichtung angezeigt werden, wobei die zeitliche Abfolge bevorzugt farbkodiert ist, um die über einen bestimmten Zeitraum eingenommenen Zustände der produktionstechnischen Anlagen zu visualisieren.

Auch können statistische Algorithmen auf den, den Statussignalen zugeordneten Zuständen, insbesondere auf der zeitlichen Abfolge der Zustände, angewendet werden, um die Effizienz und Produktivität der produktionstechnischen Anlagen zu ermitteln und die betrieblichen Abläufe zu optimieren.

Mit weiterem Vorteil kann vorgesehen sein, dass die Datenverbindung, insbesondere die direkte oder indirekte Datenverbindung zwischen der Sendevorrichtung und der Empfangsbasis, eine drahtlose Datenverbindung, insbesondere eine Funkverbindung, eine WLAN-Verbindung, eine Bluetooth-Verbindung oder eine Infrarot-Verbindung ist.

Durch Ausgestaltung der Datenverbindung als eine drahtlose Datenverbindung kann auf die Verlegung von kabelgebundenen Netzwerken verzichtet werden.

Jedoch kann die Datenverbindung auch eine kabelgebundene Verbindung sein.

Die Übermittlung der Statussignale kann verschlüsselt erfolgen.

Ferner kann bevorzugt vorgesehen sein, dass die mindestens eine Sendevorrichtung, bevorzugt die mindestens zwei Sendevorrichtungen, als Sende-Empfangsvorrichtungen ausgebildet ist oder sind.

Durch die Ausgestaltung der Sendevorrichtungen als Sende-Empfangsvorrichtungen kann jede Sendevorrichtung auch die Statussignale anderer Sende-Empfangsvorrichtungen empfangen und weiterleiten. Insbesondere in einem vermaschten Netzwerk ist die Ausgestaltung der Sendevorrichtungen als Sende-Empfangsvorrichtungen vorteilhaft.

Mit weiterem Vorteil ist vorgesehen, dass die Zuordnungsvorrichtung ausgebildet ist, die den Statussignalen zugeordneten Zustände in ein Rechnernetz, insbesondere in eine Cloud, zu übermitteln.

Durch die Übermittlung der Zustände in ein Rechnernetz können diese dezentral bereitgestellt werden, sodass die Zustände zur Anzeige oder Auswertung von verschiedenen Anzeigevorrichtungen oder Auswertevorrichtungen, wie beispielsweise von lokalen Workstations oder Computern, an verschiedenen Orten abgerufen werden, ohne dass eine aufwändige lokale Daten-Infrastruktur vorgesehen werden muss.

Ferner kann mit Vorteil vorgesehen sein, dass die Anzeigevorrichtung und/oder die Auswertevorrichtung ausgebildet ist, die den Statussignalen zugeordneten Zustände zur Anzeige oder Auswertung von dem Rechnernetz, insbesondere der Cloud, anzufordern und zu empfangen.

Eine weitere Lösung der der Erfindung zugrundeliegenden Aufgabe liegt in der Bereitstellung eines Verfahrens zur Überwachung von produktionstechnischen Anlagen, wobei mindestens ein Statussignal einer produktionstechnischen Anlage an eine Zuordnungsvorrichtung übermittelt wird, und wobei das mindestens eine Statussignal von der Zuordnungsvorrichtung einem Zustand aus einer vorbestimmten Gruppe von Zuständen zugeordnet wird, wobei mindestens zwei Sendevorrichtungen vorgesehen sind, wobei jeder Sendevorrichtung eine produktionstechnische Anlage zugeordnet ist, wobei die Statussignale der der jeweiligen Sendevorrichtung zugeordneten produktionstechnischen Anlage von der jeweiligen Sendevorrichtung direkt oder indirekt an eine Empfangsbasis gesendet werden und von der Empfangsbasis an die Zuordnungsvorrichtung weitergeleitet werden, dadurch gekennzeichnet, dass die mindestens zwei Sendevorrichtungen ein vermaschtes Netzwerk bilden, wobei die Statussignale über das vermaschte Netzwerk übermittelt werden, wobei die mindestens zwei Sendevorrichtungen als Sende-Empfangsvorrichtungen ausgebildet sind, wobei die Sende-Empfangsvorrichtungen jeweils einen Signalverstärker aufweisen und/oder als Signalverstärker ausgebildet sind, und wobei eine Anzeigevorrichtung mit einem Bildschirm in Echtzeit die den Statussignalen zugeordneten Zustände anzeigt, wobei die Anzeigevorrichtung einen Lageplan anzeigt, wobei auf dem Lageplan Orte der Sendevorrichtungen und/oder der produktionstechnischen Anlagen verzeichnet sind, und wobei die Anzeigevorrichtung die den Statussignalen zugeordneten Zustände auf dem Lageplan am Ort der jeweiligen Sendevorrichtung und/oder der zugeordneten produktionstechnischen Anlage anzeigt.

Das erfindungsgemäße Verfahren ist besonders zur Durchführung mit einem vorbeschriebenen System zur Überwachung von produktionstechnischen Anlagen geeignet. Sämtliche für das vorbeschriebene System zur Überwachung von produktionstechnischen Anlagen erläuterten Ausgestaltungen sind in entsprechender Weise auch auf das Verfahren zur Überwachung von produktionstechnischen Anlagen anwendbar. Zudem werden mit dem Verfahren die gleichen Vorteile wie mit dem System erzielt.

Ferner kann die vorbestimmte Gruppe von Zuständen einen Fehlerzustand und/oder einen Anlagenstillstandzustand und/oder einen Produktionszustand und/oder einen Umrüstungszustand umfassen. Zudem kann die vorbestimmte Gruppe von Zuständen auch einen Qualitätslagezustand oder einen Materialmangelzustand umfassen. Grundsätzlich ist die Gruppe der vorbestimmten Zustände ist nicht auf diese vorgenannten Zustände begrenzt.

Darüber hinaus kann ein Default-Zustand vorgesehen sein, welcher Statussignalen zugeordnet wird, welche keinem betriebstechnisch relevanten Zustand entsprechen.

Bevorzugt kann vorgesehen sein, dass die Statussignale einer jeweiligen produktionstechnischen Anlage von einem Leuchtelement einer der produktionstechnischen Anlage zugeordneten Anlagenstatusleuchte angezeigt werden.

Ferner können die den Statussignalen zugeordneten Zustände in einer Speichervorrichtung gespeichert werden, und/oder es kann eine zeitliche Abfolge der den Statussignalen zugeordneten Zustände von einer Auswertungsvorrichtung ausgewertet werden.

Zudem ist es möglich, dass die Übermittlung der Statussignale über eine drahtlose Datenverbindung, insbesondere über eine Funkverbindung, eine WLAN-Verbindung, eine Bluetooth-Verbindung oder eine Infrarotverbindung, erfolgt.

Ferner kann bevorzugt vorgesehen sein, dass die den Statussignalen zugeordneten Zustände in ein Rechnernetz, insbesondere in eine Cloud, übermittelt werden.

Mit Vorteil kann vorgesehen sein, dass die den Statussignalen zugeordneten Zustände zur Anzeige oder Auswertung von dem Rechnernetz, insbesondere der Cloud, bevorzugt von der Anzeigevorrichtung und/oder der Auswertevorrichtung, angefordert und empfangen werden.

Zudem wird ein Computerprogramm bereitgestellt, umfassend Befehle, die bei der Ausführung des Programms durch einen Computer diesen veranlassen, ein vorbeschriebenes Verfahren auszuführen.

Ein weiterer Vorschlag besteht in einem computerlesbaren Datenträger, auf dem das vorbeschriebene Computerprogramm gespeichert ist.

### Kurze Beschreibung der Figuren

Die vorliegende Erfindung wird nachstehend näher anhand der Figuren erläutert. Es zeigen:
- Fig. 1a: ein erstes System zur Überwachung von produktionstechnischen Anlagen,
- Fig. 1b: ein zweites System zur Überwachung von produktionstechnischen Anlagen,
- Fig. 2: ein Ablaufdiagramm eines Verfahrens zur Überwachung von produktionstechnischen Anlagen,
- Fig. 3: eine Anzeige auf einem Bildschirm einer Anzeigevorrichtung,
- Fig. 4: eine Anzeige auf einem Bildschirm einer Auswerteeinheit, und
- Fig. 5: eine Eingabemaske zur Eingabe einer Zuordnungsvorschrift.

### Ausführliche Beschreibung der Figuren

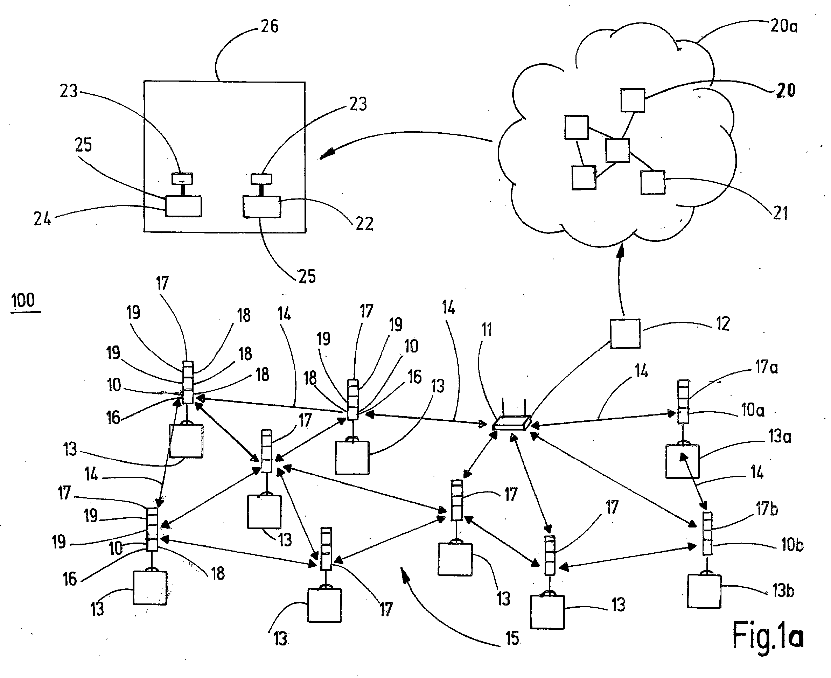

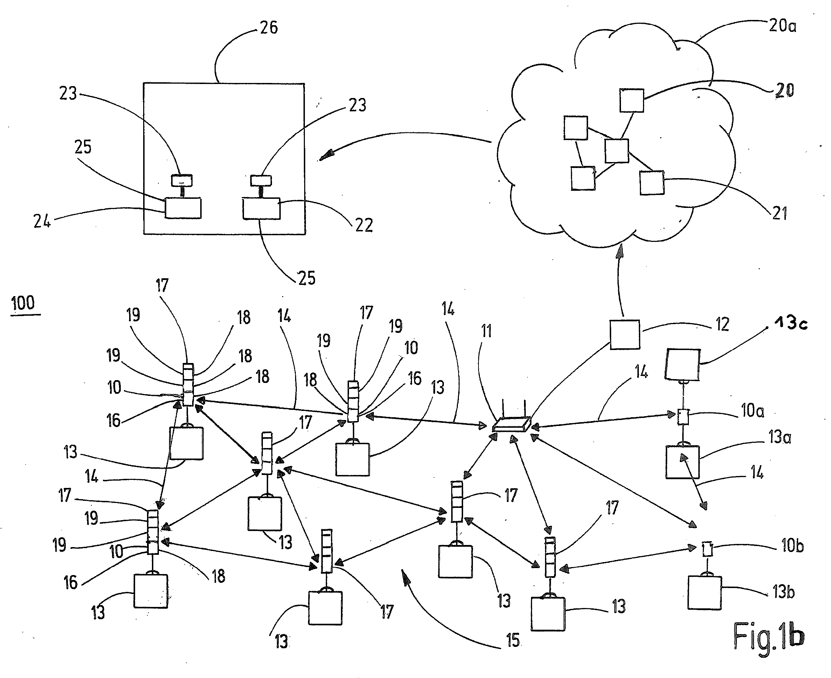

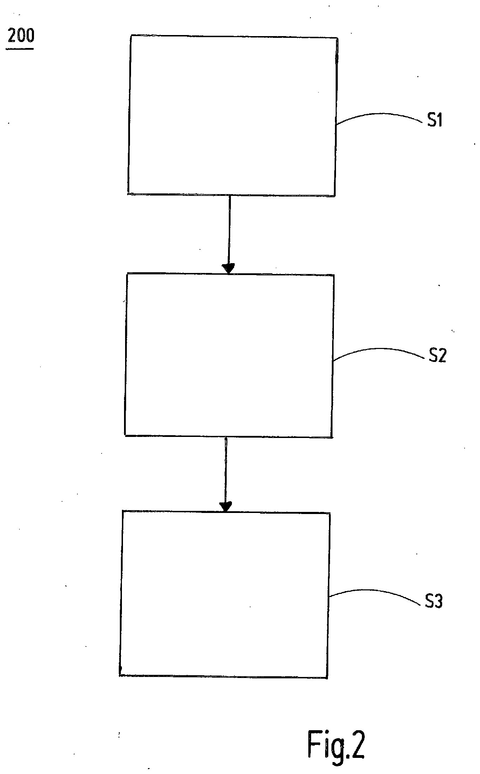

Fig. 1a und 1b zeigen Systeme 100 zur Überwachung von produktionstechnischen Anlagen. Fig. 2 zeigt ein Ablaufdiagramm für ein Verfahren 200 zur Überwachung von produktionstechnischen Anlagen.

Das System 100 nach Fig. 1a umfasst Sendevorrichtungen 10, 10a, 10b, eine Empfangsbasis 11 und eine Zuordnungsvorrichtung 12. Jeder Sendevorrichtung 10, 10a, 10b ist eine produktionstechnische Anlage 13, 13a, 13b zugeordnet. Statussignale jeder produktionstechnischen Anlage 13, 13a, 13b werden von der entsprechenden Sendevorrichtung 10, 10a, 10b über eine drahtlose Datenverbindung 14 an die Empfangsbasis 11 übermittelt. Das System 100 der Sendevorrichtungen 10, 10a, 10b ist als vermaschtes Netzwerk 15 ausgebildet. Ferner ist jede Sendevorrichtung 10, 10a, 10b als Sende-Empfangsvorrichtung 16 ausgebildet. Statussignale der produktionstechnischen Anlagen 13, 13a, 13b werden in dem vermaschten Netzwerk 15 von der entsprechenden Sendevorrichtung 10, 10a, 10b bzw. Sende-Empfangsvorrichtung 16 indirekt an die Empfangsbasis 11 weitergeleitet, d.h. die Statussignale werden von einer Sende-Empfangsvorrichtung 16 zur nächsten Sende-Empfangsvorrichtung 16 weitergereicht, bis die Statussignale die Empfangsbasis 11 erreicht haben. Der Weg, welchen die Statussignale durch das vermaschte Netzwerk 15 nehmen, ist nicht festgelegt, sondern wird durch einen Algorithmus bestimmt.

Die Sendevorrichtungen 10, 10a, 10b beziehungsweise die Sende-Empfangsvorrichtungen 16 sind als Module 18 von Anlagenstatusleuchten 17, 17a, 17b ausgebildet. Die Anlagenstatusleuchten 17, 17a, 17b sind modular aufgebaut und umfassen als weitere Module 18 mehrere Leuchtelemente 19. Die Leuchtelemente 19 sind ausgebildet, die Statussignale der produktionstechnischen Anlagen 13, 13a, 13b in visuelle Signale umzusetzen. Wie in Fig. 1a gezeigt umfasst das System eine Vielzahl von Anlagenstatusleuchten 17, 17a, 17b. Die Anlagenstatusleuchten 17, 17a, 17b sind identisch aufgebaut und weisen insbesondere alle als Module 18 jeweils eine Sendevorrichtung 10, 10a, 10b und Leuchtelemente 19 auf.

Die an die Empfangsbasis 11 übermittelten Statussignale der produktionstechnischen Anlagen 13, 13a, 13b werden von der Empfangsbasis 11 an die Zuordnungsvorrichtung 12 weitergeleitet. Die Zuordnungsvorrichtung 12 ordnet den Statussignalen der produktionstechnischen Anlagen 13, 13a, 13b jeweils mindestens einen Zustand aus einer vorbestimmten Gruppe von Zuständen zu. Die zugeordneten Zustände werden anschließend von der Zuordnungsvorrichtung 12 in ein Rechnernetz 20, welches eine sogenannte Cloud 20a realisiert, übermittelt. Das Rechnernetz 20 umfasst eine Speichervorrichtung 21. Die in der Speichervorrichtung 21 des Rechnernetzes 20 gespeicherten, den Statussignalen zugeordneten Zustände werden von einer Anzeigevorrichtung 22 angefragt und empfangen und auf einem Bildschirm 23 der Anzeigevorrichtung 22 angezeigt. Zudem können die in dem Rechnernetz 20 gespeicherten Zustände von einer Auswerteeinheit 24 angefordert, empfangen und angezeigt werden. Bei der Anzeigevorrichtung 22 und bei der Auswerteeinheit 24 kann es sich um einen Personal Computer 25, beispielsweise eine Workstation, handeln. Insbesondere können Anzeigevorrichtung 22 und Auswerteeinheit 24 in dem gleichen Personal Computer 25 oder in der gleichen Workstation kombiniert sein. Anzeigevorrichtung 22 und Auswerteeinheit 24 sind in einem Kontrollraum 26 angeordnet.

Das System 100 der Fig. 1b ist im Wesentlichen identisch mit dem System 100 der Fig. 1a ausgebildet. Ein Unterschied besteht darin, dass die Sendevorrichtungen 10a und 10b der zugeordneten produktionstechnischen Anlagen 13a und 13b als "Stand-Alone"-Vorrichtungen ausgebildet sind und nicht in einer Anlagenstatusleuchte 17 als Modul 18 integriert sind. Grundsätzlich kann das System 100 auch keine Anlagenstatusleuchten 17 umfassen und ausschließlich als Stand-Alone"-Vorrichtungen ausgebildete Sendevorrichtungen 10a und 10b umfassen. Ferner ist der Sendevorrichtung 10a neben einer ersten produktionstechnischen Anlage 13a eine weitere produktionstechnische Anlage 13c zugeordnet. Die Sendevorrichtung 10a kann daher Statussignale beider ihr zugeordneten produktionstechnischen Anlagen 13a und 13c über die Datenverbindung 14 direkt oder indirekt an die Empfangsbasis 11 senden. Darüber hinaus bestehen keine Unterschiede zu dem System 100 der Fig. 1a.

Das System 100 zur Überwachung produktionstechnischer Anlagen ist ausgelegt zur Durchführung eines Verfahrens 200 zur Überwachung produktionstechnischer Anlagen. Die Funktionsweise des Systems 100 und des Verfahrens 200 wird anhand der Fig. 1a und 2 näher erläutert. So befinde sich beispielsweise eine erste produktionstechnische Anlage 13a in einem Fehlerzustand und übermittelt ein entsprechendes erstes Statussignal an die zugeordnete Sendevorrichtung 10a der Anlagenstatusleuchte 17a. Eine zweite produktionstechnische Anlage 13b befinde sich ebenfalls in einem Fehlerzustand und übermittelt ein entsprechendes zweites Statussignal an die der zweiten produktionstechnischen Anlage 13b zugeordneten Sendevorrichtung 10b. Die produktionstechnischen Anlagen 13a und 13b sind von unterschiedlichen Herstellern gefertigt, sodass das erste Statussignal und das zweite Statussignal, welche beide einem Fehlerzustand entsprechen, ein unterschiedliches Datenformat aufweisen, bzw. einer unterschiedlichen Statuskodierung folgen. Da die Anlagenstatusleuchten 17a, 17b identisch sind, setzen diese das erste Statussignal und das zweite Statussignal mittels der Leuchtelemente 19 in unterschiedliche visuelle Signale um. Das System 100 der Fig. 1b funktioniert identisch, mit der einzigen Ausnahme, dass für die produktionstechnischen Anlagen 13a, 13b und 13c keine Anlagenstatusleuchten 17a und 17b vorgesehen sind.

In einem ersten Verfahrensschritt S1 werden die Statussignale über das vermaschte Netzwerk 15 von den Sendevorrichtungen 10a, 10b an die Empfangsbasis 11 geleitet. In einem zweiten Verfahrensschritt S2 werden die Signale von der Empfangsbasis 11 an die Zuordnungsvorrichtung 12 weitergeleitet.

Die Zuordnungsvorrichtung 12 ordnet dann in einem dritten Verfahrensschritt S3 dem ersten Statussignal und dem zweiten Statussignal einen Zustand aus einer vorbestimmten Gruppe von Zuständen zu. Im vorliegenden Fall wird die Zuordnungsvorrichtung 12 beiden Statussignalen den gleichen Zustand, nämlich einen Fehlerzustand, zuordnen.

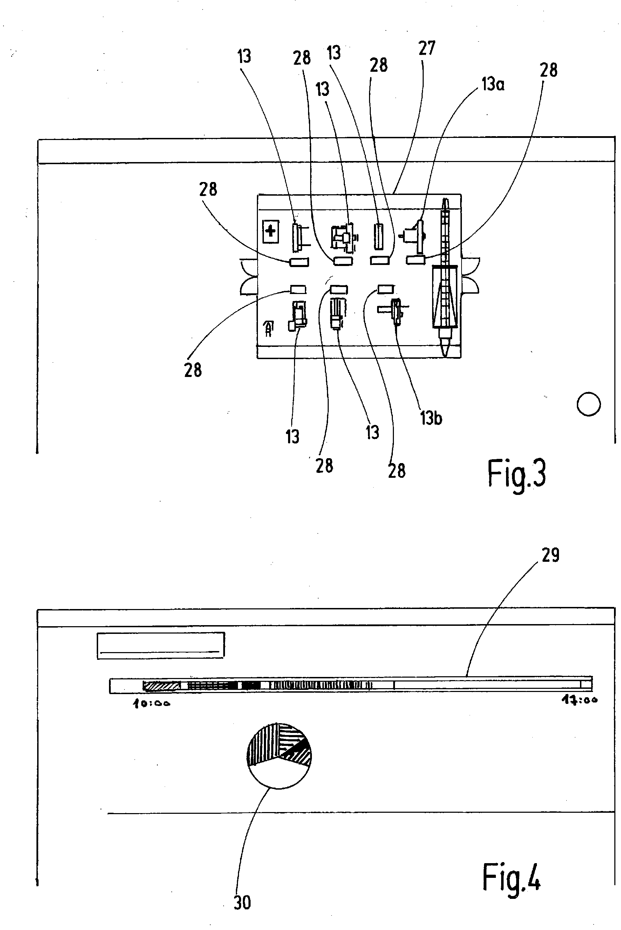

Fig. 3 zeigt eine Anzeige auf dem Bildschirm 23 der Anzeigevorrichtung 22, wie sie von einem Bediener in dem Kontrollraum 26 abgelesen werden kann. Die Anzeige zeigt einen Lageplan 27 einer Produktionsstätte. Auf dem Lageplan 27 sind die Orte der einzelnen produktionstechnischen Anlagen 13, 13a, 13b bzw. der Sendevorrichtungen 10, 10a, 10b verzeichnet. Neben jeder produktionstechnischen Anlage 13, 13a, 13b, wird der den Statussignalen zugeordnete Zustand in einem Informationsfeld 28 angezeigt, im vorliegenden Fall bedeutet dies, dass neben den auf dem Lageplan 27 verzeichneten produktionstechnischen Anlagen 13a, 13b im Informationsfeld 28 jeweils der Zustand "Fehler" angezeigt wird. Es wird angemerkt, dass die Anzeige des Lageplans auch anders erfolgen kann und dass die Zustände der produktionstechnischen Anlagen 13, 13a, 13b nicht zwingend auf dem Lageplan angezeigt werden müssen. Ein Bediener an dem Bildschirm 23 der Anzeigevorrichtung erhält also von den beiden produktionstechnischen Anlagen 13a und 13b die einheitliche Information eines Fehlerzustandes, obwohl die Anlagenstatusleuchten 17a, 17b unterschiedliche visuelle Signale aussenden.

In einer Weiterentwicklung des Systems 100 werden die Statussignale der produktionstechnischen Anlagen 13, 13a, 13b über die Sendevorrichtungen 10, 10a, 10b und die Empfangsbasis 11 an die Zuordnungsvorrichtung 12 gesendet werden und von der Zuordnungsvorrichtung 12 wird den Statussignalen jeweils mindestens ein Zustand zugeordnet. Die zugeordneten Zustände werden dann über das vermaschte Netzwerk 15 an die jeweilige Anlagenstatusleuchten 17, 17a, 17b übermittelt, welche die Informationen über die zugeordneten Zustände in ein jeweiliges visuelles Signal umsetzen. Auf diese Weise wird sichergestellt, dass auch bei voneinander verschiedenen Statussignalen der produktionstechnischen Anlagen 13, 13a, 13b, welche den gleichen Betriebszustand beschreiben, identische visuelle Signale von den Anlagenstatusleuchten 17, 17a, 17b erzeugt werden.

In Fig. 4 zeigt eine beispielhafte Anzeige auf einem Bildschirm 23 der Auswerteeinheit 24. Auf dem Bildschirm 23 wird eine zeitliche Abfolge 29 von Zuständen für eine bestimmte produktionstechnische Anlage 13, 13a, 13b im Zeitraum von 10:00 Uhr bis 17:00 Uhr angezeigt. Die in der zeitlichen Abfolge 29 angezeigten Zustände können farbkodiert sein. Ferner wird ein Tortendiagramm 30 angezeigt, welches die prozentuale Verteilung der unterschiedlichen Zustände über die zeitliche Abfolge 29 visualisiert.

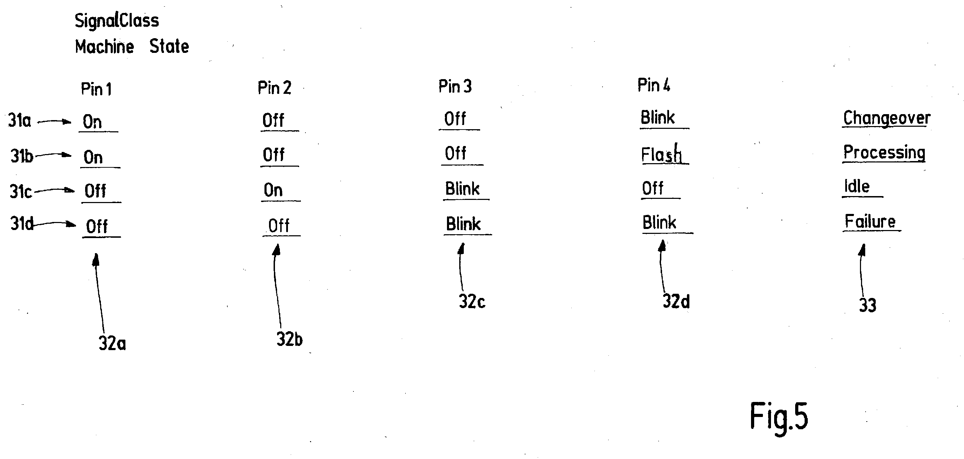

In Fig. 5 ist eine Eingabemaske zur Eingabe einer Zuordnungsvorschrift für die von der Zuordnungsvorrichtung 12 vorgenommene Zuordnung der Statussignale zu den Zuständen gezeigt. Die Eingabemaske enthält vier Zeilen 31a, 31b, 31c, 31d, welche jeweils die Zuordnungsvorschriften für vier verschiedene Statussignale einer bestimmten produktionstechnischen Anlage 13, 13a, 13b zeigen. In den Spalten 32a, 32b, 32c, 32d sind für vier Leuchtelemente 19 die jeweils möglichen Aktivierungsmuster eintragbar. Jedes Leuchtelement kann ein Dauerlicht zeigen ("On"), ausgeschaltet sein ("Off"), sich in einem Blinkmodus befinden ("Blink") oder Lichtblitze aussenden ("Flash"). In der letzten Spalte 33 wird jeder in einer Zeile 31a, 31b, 31c, 31d angegebenen spezifischen Kombination von Aktivierungsmustern der Leuchtelemente 19 ein bestimmter Zustand aus einer vorbestimmten Gruppe von Zuständen zugeordnet. In der Anzeige der Fig. 5 umfasst die Gruppe der vorbestimmten Zustände die Zustände Werkzeugwechsel ("Changeover"), In Betrieb ("Processing"), Stillstand ("Idle") und Fehler ("Failure"). Die Gruppe der vorbestimmten Zustände ist nicht auf diese vier Zustände begrenzt.

### Liste der Bezugszeichen

- 100: System

- 10: Sendevorrichtung
- 10a: Sendevorrichtung
- 10b: Sendevorrichtung
- 11: Empfangsbasis
- 12: Zuordnungsvorrichtung
- 13: Produktionstechnische Anlage
- 13a: Produktionstechnische Anlage
- 13b: Produktionstechnische Anlage
- 13c: Produktionstechnische Anlage
- 14: Drahtlose Datenverbindung
- 15: Vermaschtes Netzwerk
- 16: Sende-Empfangsvorrichtung
- 17: Anlagenstatusleuchte
- 17a: Anlagenstatusleuchte
- 17b: Anlagenstatusleuchte
- 18: Modul
- 19: Leuchtelement

- 20: Rechnernetz
- 20a: Cloud
- 21: Speichervorrichtung
- 22: Anzeigevorrichtung
- 23: Bildschirm
- 24: Auswerteeinheit
- 25: Personal Computer
- 26: Kontrollraum
- 27: Lageplan
- 28: Informationsfeld
- 29: Zeitliche Abfolge
- 30: Tortendiagramm
- 31a: Zeile
- 31b: Zeile
- 31c: Zeile
- 31d: Zeile
- 32a: Spalte
- 32b: Spalte
- 32c: Spalte
- 32d: Spalte
- 33: Spalte

- 200: Verfahren

- S1: Verfahrensschritt
- S2: Verfahrensschritt
- S3: Verfahrensschritt

## Patentansprüche

1. System (100) zur Überwachung von produktionstechnischen Anlagen (13, 13a, 13b, 13c), umfassend mindestens zwei Sendevorrichtungen (10, 10a, 10b), eine Empfangsbasis (11) und eine Zuordnungsvorrichtung (12) und eine Anzeigevorrichtung (22) mit einem Bildschirm (23), wobei die mindestens zwei Sendevorrichtungen (10, 10a, 10b) ausgebildet sind, mindestens ein Statussignal mindestens einer der jeweiligen Sendevorrichtung (10, 10a, 10b) zugeordneten produktionstechnischen Anlage (13, 13a, 13b, 13c) über eine Datenverbindung direkt oder indirekt an die Empfangsbasis (11) zu senden, wobei die Empfangsbasis (11) ausgebildet ist, das mindestens eine Statussignal zu empfangen und an die Zuordnungsvorrichtung (12) weiterzuleiten, wobei die Zuordnungsvorrichtung (12) einen elektronischen Schaltkreis umfasst und ausgebildet ist, dem mindestens einen Statussignal mindestens einen Zustand aus einer vorbestimmten Gruppe von Zuständen zuzuordnen, wobei die mindestens zwei Sendevorrichtungen (10, 10a, 10b) ein vermaschtes Netzwerk (15) bilden, wobei die mindestens zwei Sendevorrichtungen (10, 10a, 10b) als Sende-Empfangsvorrichtungen (16) ausgebildet sind, wobei die Sende-Empfangsvorrichtungen (16) jeweils einen Signalverstärker aufweisen und/oder als Signalverstärker ausgebildet sind, **dadurch gekennzeichnet, dass** die Anzeigevorrichtung (22) ausgebildet ist in Echtzeit die den Statussignalen zugeordneten Zustände anzuzeigen, wobei die Anzeigevorrichtung (22) ausgebildet ist, einen Lageplan (27) anzuzeigen, wobei auf dem Lageplan (27) Orte der Sendevorrichtungen (10, 10a, 10b) und/oder der produktionstechnischen Anlagen (13, 13a, 13b, 13c) verzeichnet sind, wobei die Anzeigevorrichtung (22) ausgebildet ist, die den Statussignalen zugeordneten Zustände auf dem Lageplan (27) am Ort der jeweiligen Sendevorrichtung (10, 10a, 10b) und/oder der zugeordneten produktionstechnischen Anlage (13, 13a, 13b, 13c) anzuzeigen.

2. System (100) nach Anspruch 1, wobei die vorbestimmte Gruppe von Zuständen einen Fehlerzustand und/oder einen Anlagenstillstandzustand und/oder einen Produktionszustand und/oder einen Umrüstungszustand und/oder einen Werkzeugwechselzustand und/oder einen Qualitätslagezustand und/oder einen Materialmangelzustand umfasst.

3. System (100) nach Anspruch 1 oder 2, wobei die Statussignale der den mindestens zwei Sendevorrichtungen (10, 10a, 10b) zugeordneten produktionstechnischen Anlagen (13, 13a, 13b, 13c) in einem unterschiedlichen Datenformat vorliegen und/oder mittels unterschiedlicher Netzwerkprotokolle übermittelt werden, und/oder dass die den Sendevorrichtungen (10, 10a, 10b) zugeordneten produktionstechnischen Anlagen (13, 13a, 13b, 13c) bei im Wesentlichen gleichen Betriebszuständen unterschiedliche Statussignale erzeugen.

4. System (100) nach einem der vorgenannten Ansprüche, umfassend eine Anlagenstatusleuchte (17, 17a, 17b), wobei die Anlagenstatusleuchte (17, 17a, 17b) bevorzugt mindestens ein Leuchtelement (19) zur Anzeige eines Statussignals einer Anlage (13, 13a, 13b, 13c) aufweist, und/oder wobei die Anlagenstatusleuchte (17, 17a, 17b) bevorzugt modular aufgebaut ist, wobei eine der Sendevorrichtungen (10, 10a, 10b) ein erstes Modul (18) ist und das Leuchtelement (19) ein zweites Modul (18) ist, und/oder umfassend eine Speichervorrichtung (21), welche ausgebildet ist, die den Statussignalen zugeordneten Zustände zu speichern, und/oder umfassend eine Auswertevorrichtung (24), welche ausgebildet ist, eine zeitliche Abfolge (29) der den Statussignalen zugeordneten Zustände auszuwerten.

5. System (100) nach einem der vorgenannten Ansprüche, wobei die Datenverbindung eine drahtlose Datenverbindung (14), insbesondere eine Funkverbindung, eine WLAN-Verbindung, eine Bluetooth-Verbindung oder eine Infrarotverbindung, ist.

6. System (100) nach einem der vorgenannten Ansprüche, wobei die Zuordnungsvorrichtung (12) ausgebildet ist, die den Statussignalen zugeordneten Zustände in ein Rechnernetz (20), insbesondere in eine Cloud (20a), zu übermitteln, wobei die Anzeigevorrichtung (22) und/oder die Auswertevorrichtung (24) bevorzugt ausgebildet ist, die den Statussignalen zugeordneten Zustände zur Anzeige oder Auswertung von dem Rechnernetz (20), insbesondere der Cloud (20a), anzufordern und zu empfangen.

7. Verfahren (200) zur Überwachung von produktionstechnischen Anlagen (13, 13a, 13b, 13c), wobei mindestens ein Statussignal einer produktionstechnischen Anlage (13, 13a, 13b, 13c) an eine Zuordnungsvorrichtung (12) übermittelt wird, und wobei das mindestens eine Statussignal von der Zuordnungsvorrichtung (12) einem Zustand aus einer vorbestimmten Gruppe von Zuständen zugeordnet wird, wobei mindestens zwei Sendevorrichtungen (10, 10a, 10b) vorgesehen sind, wobei jeder Sendevorrichtung (10, 10a, 10b) eine produktionstechnische Anlage (13, 13a, 13b, 13c) zugeordnet ist, wobei die Statussignale der der jeweiligen Sendevorrichtung (10, 10a, 10b) zugeordneten produktionstechnischen Anlage (13, 13a, 13b, 13c) von der jeweiligen Sendevorrichtung (10, 10a, 10b) direkt oder indirekt an eine Empfangsbasis (11) gesendet werden und von der Empfangsbasis (11) an die Zuordnungsvorrichtung (12) weitergeleitet werden, wobei die mindestens zwei Sendevorrichtungen (10, 10a, 10b) ein vermaschtes Netzwerk (15) bilden, wobei die Statussignale über das vermaschte Netzwerk (15) übermittelt werden, wobei die mindestens zwei Sendevorrichtungen (10, 10a, 10b) als Sende-Empfangsvorrichtungen (16) ausgebildet sind, wobei die Sende-Empfangsvorrichtungen (16) jeweils einen Signalverstärker aufweisen und/oder als Signalverstärker ausgebildet sind, **dadurch gekennzeichnet, dass** eine Anzeigevorrichtung (22) mit einem Bildschirm (23) in Echtzeit die den Statussignalen zugeordneten Zustände anzeigt, dass die Anzeigevorrichtung (22) einen Lageplan (27) anzeigt, wobei auf dem Lageplan (27) Orte der Sendevorrichtungen (10, 10a, 10b) und/oder der produktionstechnischen Anlagen (13, 13a, 13b, 13c) verzeichnet sind, und dass die Anzeigevorrichtung (22) die den Statussignalen zugeordneten Zustände auf dem Lageplan (27) am Ort der jeweiligen Sendevorrichtung (10, 10a, 10b) und/oder der zugeordneten produktionstechnischen Anlage (13, 13a, 13b, 13c) anzeigt.

8. Verfahren (200) nach Anspruch 7, wobei die vorbestimmte Gruppe von Zuständen einen Fehlerzustand und/oder einen Anlagenstillstandzustand und/oder einen Produktionszustand und/oder einen Umrüstungszustand und/oder einen Qualitätslagezustand und/oder einen Materialmangelzustand umfasst.

## Claims

1. System (100) for monitoring production facilities (13, 13a, 13b, 13c), comprising at least two transmitting devices (10, 10a, 10b), a receiving base (11) and an allocation device (12), and a display device (22) with a screen (23), wherein the at least two transmitting devices (10, 10a, 10b) are configured to transmit at least one status signal of at least one production facility (13, 13a, 13b, 13c) allocated to the respective transmitting device (10, 10a, 10b) directly or indirectly to the receiving base (11) via a data link, wherein the receiving base (11) is configured to receive the at least one status signal and to forward it to the allocation device (12), wherein the allocation device (12) comprises an electronic circuit and is configured to allocate to the at least one status signal at least one state from a predetermined group of states, wherein the at least two transmitting devices (10, 10a, 10b) form a meshed network (15), wherein the at least two transmitting devices (10, 10a, 10b) are configured as transmitting-receiving devices (16), wherein the transmitting-receiving devices (16) each have a signal amplifier and/or are configured as signal amplifiers, **characterized in that** the display device (22) is configured to display, in real time, the states allocated to the status signals, wherein the display device (22) is configured to display a location map (27), wherein locations of the transmitting devices (10, 10a, 10b) and/or of the production facilities (13, 13a, 13b, 13c) are marked on the location map (27), wherein the display device (22) is configured to display the states allocated to the status signals on the location map (27) at the location of the respective transmitting device (10, 10a, 10b) and/or of the allocated production facility (13, 13a, 13b, 13c).

2. System (100) according to claim 1, wherein the predetermined group of states comprises a fault state and/or a facility shutdown state and/or a production state and/or a changeover state and/or a tool change state and/or a quality situation state and/or a material shortage state.

3. System (100) according to claim 1 or 2, wherein the status signals of the production facilities (13, 13a, 13b, 13c) allocated to the at least two transmitting devices (10, 10a, 10b) are present in a different data format and/or are transmitted by means of different network protocols, and/or that the production facilities (13, 13a, 13b, 13c) allocated to the transmitting devices (10, 10a, 10b) generate different status signals in the case of essentially identical operating states.

4. System (100) according to one of the preceding claims, comprising a facility status light (17, 17a, 17b), wherein the facility status light (17, 17a, 17b) preferably has at least one light element (19) for displaying a status signal of a facility (13, 13a, 13b, 13c), and/or wherein the facility status light (17, 17a, 17b) is preferably of modular design, wherein one of the transmitting devices (10, 10a, 10b) is a first module (18) and the lighting element (19) is a second module (18), and/or comprising a storage device (21) which is configured to store the states allocated to the status signals, and/or comprising an evaluation device (24) which is configured to evaluate a time sequence (29) of the states allocated to the status signals.

5. System (100) according to one of the preceding claims, wherein the data connection is a wireless data connection (14), in particular a radio connection, a WLAN connection, a Bluetooth connection or an infrared connection.

6. System (100) according to one of the preceding claims, wherein the allocation device (12) is configured to transmit the states allocated to the status signals to a computer network (20), in particular to a cloud (20a), wherein the display device (22) and/or the evaluation device (24) is preferably configured to request and receive the states allocated to the status signals for display or evaluation from the computer network (20), in particular the cloud (20a).

7. Method (200) for monitoring production facilities (13, 13a, 13b, 13c), wherein at least one status signal of a production facility (13, 13a, 13b, 13c) is transmitted to an allocation device (12), and wherein the at least one status signal is allocated by the allocation device (12) to a state from a predetermined group of states, wherein at least two transmitting devices (10, 10a, 10b) are provided, wherein a production facility (13, 13a, 13b, 13c) is allocated to each transmitting device (10, 10a, 10b), wherein the status signals of the production facility (13, 13a, 13b, 13c) allocated to the respective transmitting device (10, 10a, 10b) are transmitted directly or indirectly by the respective transmitting device (10, 10a, 10b) to a receiving base (11) and are forwarded by the receiving base (11) to the allocation device (12), wherein the at least two transmitting devices (10, 10a, 10b) form a meshed network (15), wherein the status signals are transmitted via the meshed network (15), wherein the at least two transmitting devices (10, 10a, 10b) are configured as transmitting-receiving devices (16), wherein the transmitting-receiving devices (16) each have a signal amplifier and/or are configured as signal amplifiers, **characterized in that** a display device (22) with a screen (23) displays in real time the states allocated to the status signals, **in that** the display device (22) displays a location map (27), wherein locations of the transmitting devices (10, 10a, 10b) and/or of the production facilities (13, 13a, 13b, 13c) are marked on the location map (27), and **in that** the display device (22) displays the states allocated to the status signals on the location map (27) at the location of the respective transmitting device (10, 10a, 10b) and/or of the allocated production facility (13, 13a, 13b, 13c).

8. Method (200) according to claim 7, wherein the predetermined group of states comprises a fault state and/or a facility shutdown state and/or a production state and/or a changeover state and/or a quality situation state and/or a material shortage state.

## Revendications

1. Système (100) de surveillance d'installations de fabrication (13, 13a, 13b, 13c), comprenant au moins deux dispositifs émetteurs (10, 10a, 10b), une base réceptrice (11) et un dispositif d'attribution (12) et un dispositif d'affichage (22) avec un écran (23), sachant que les au moins deux dispositifs émetteurs (10, 10a, 10b) sont constitués pour envoyer directement ou indirectement à la base réceptrice (11) par une liaison de données au moins un signal d'état d'au moins une installation de fabrication (13, 13a, 13b, 13c) attribuée au dispositif émetteur respectif (10, 10a, 10b), sachant que la base réceptrice (11) est constituée pour recevoir l'au moins un signal d'état et transmettre au dispositif d'attribution (12), sachant que le dispositif d'attribution (12) comprend un circuit de commutation électronique et est constitué pour attribuer à l'au moins un signal d'état au moins un état tiré d'un groupe prédéterminé d'états, sachant que les au moins deux dispositifs émetteurs (10, 10a, 10b) forment un réseau interconnecté (15), sachant que les au moins deux dispositifs émetteurs (10, 10a, 10b) sont constitués sous la forme de dispositifs émetteurs-récepteurs (16), sachant que les dispositifs émetteurs-récepteurs (16) comportent respectivement un amplificateur de signaux et/ou sont constitués sous la forme d'amplificateurs de signaux, **caractérisé en ce que** le dispositif d'affichage (22) est constitué pour afficher en temps réel les états attribués aux signaux d'état, sachant que le dispositif d'affichage (22) est constitué pour afficher un plan de situation (27), sachant que les emplacements des dispositifs émetteurs (10, 10a, 10b) et/ou des installations de fabrication (13, 13a, 13b, 13c) sont listés sur le plan de situation (27), sachant que le dispositif d'affichage (22) est constitué pour afficher les états attribués aux signaux d'état sur le plan de situation (27) à l'emplacement du dispositif émetteur respectif (10, 10a, 10b) et/ou de l'installation de fabrication attribuée (13, 13a, 13b, 13c).

2. Système (100) selon la revendication 1, sachant que le groupe prédéterminé d'états comprend un état de défaut et/ou un état d'arrêt d'installation et/ou un état de fabrication et/ou un état de conversion et/ou un état de changement d'outil et/ou un état de situation de qualité et/ou un état de manque en matériau.

3. Système (100) selon la revendication 1 ou 2, sachant que les signaux d'état des installations de fabrication (13, 13a, 13b, 13c) attribuées aux au moins deux dispositifs émetteurs (10, 10a, 10b) sont présents dans un format de données différent et/ou sont transmis au moyen de protocoles de réseau différents et/ou que les installations de fabrication (13, 13a, 13b, 13c) attribuées aux dispositifs émetteurs (10, 10a, 10b) produisent des signaux d'état différents à des états de fonctionnement pour l'essentiel identiques.

4. Système (100) selon l'une quelconque des revendications précédentes, comprenant un éclairage d'état d'installation (17, 17a, 17b), sachant que I' éclairage d'état d'installation (17, 17a, 17b), comporte de préférence au moins un élément d'éclairage (19) pour afficher un signal d'état d'une installation (13, 13a, 13b, 13c) et/ou sachant que l'éclairage d'état d'installation (17, 17a, 17b) est conçu de préférence de façon modulaire, sachant qu'un des dispositifs émetteurs (10, 10a, 10b) est un premier module (18) et l'élément d'éclairage (19) est un deuxième module (18) et/ou comprenant un dispositif de mémorisation (21), lequel est constitué pour mémoriser les états attribués aux signaux d'état et/ou comprenant un dispositif d'exploitation (24), lequel est constitué pour exploiter une suite dans le temps (29) des états attribués aux signaux d'état.

5. Système (100) selon l'une quelconque des revendications précédentes, sachant que la liaison de données est une liaison de données sans fil (14), en particulier une liaison radio, une liaison par réseau local sans fil (WLAN), une liaison de type Bluetooth ou une liaison infrarouge.

6. Système (100) selon l'une quelconque des revendications précédentes, sachant que le dispositif d'attribution (12) est constitué pour transmettre les états attribués aux signaux d'état dans un réseau informatique (20), en particulier dans un réseau de stockage sur Internet (Cloud) (20a), sachant que le dispositif d'affichage (22) et/ou le dispositif d'exploitation (24) est constitué de préférence pour demander et recevoir les états attribués aux signaux d'état pour affichage ou exploitation par le réseau informatique (20), en particulier par réseau de stockage sur Internet (Cloud) (20a).

7. Procédé (200) de surveillance d'installations de fabrication (13, 13a, 13b, 13c), sachant qu'au moins un signal d'état d'une installation de fabrication (13, 13a, 13b, 13c) est transmis à un dispositif d'attribution (12) et sachant que l'au moins un signal d'état est attribué par le dispositif d'attribution (12) à un état d'un groupe prédéterminé d'états, sachant qu'au moins deux dispositifs émetteurs (10, 10a, 10b) sont prévus, sachant qu'une installation de fabrication (13, 13a, 13b, 13c) est attribuée à chaque dispositif émetteur (10, 10a, 10b), sachant que les signaux d'état de l'installation de fabrication (13, 13a, 13b, 13c) attribuée au dispositif émetteur (10, 10a, 10b) respectif sont envoyés directement ou indirectement par le dispositif émetteur respectif (10, 10a, 10b) à une base réceptrice (11) et sont transmis par la base réceptrice (11) au dispositif d'attribution (12), sachant que les au moins deux dispositifs émetteurs (10, 10a, 10b) forment un réseau interconnecté (15), sachant que les signaux d'état sont transmis par le réseau interconnecté (15), sachant que les au moins deux dispositifs émetteurs (10, 10a, 10b) sont constitués sous la forme de dispositifs émetteurs-récepteurs (16), sachant que les dispositifs émetteurs-récepteurs (16) comportent respectivement un amplificateur de signaux et/ou sont constitués sous la forme d'amplificateurs de signaux, **caractérisé en ce qu'**un dispositif d'affichage (22) avec un écran (23) affiche en temps réel les états attribués aux signaux d'état, **en ce que** le dispositif d'affichage (22) affiche un plan de situation (27), sachant que les emplacements des dispositifs émetteurs (10, 10a, 10b) et/ou des installations de fabrication (13, 13a, 13b, 13c) sont listés sur le plan de situation (27) et **en ce que** le dispositif d'affichage (22) affiche les états attribués aux signaux d'état sur le plan de situation (27) à l'emplacement du dispositif émetteur respectif (10, 10a, 10b) et/ou de l'installation de fabrication attribuée (13, 13a, 13b, 13c).

8. Procédé (200) selon la revendication 7, sachant que le groupe prédéterminé d'états comprend un état de défaut et/ou un état d'arrêt d'installation et/ou un état de fabrication et/ou un état de conversion et/ou un état de situation de qualité et/ou un état de manque en matériau.
